# EUROPEAN PATENT APPLICATION

(11) **EP 2 034 298 A1**
(43) Date of publication of application: **11.03.2009**
(21) Application number: 07253539.6
(22) Date of filing: 07.09.2007
(51) Int. Cl.: G01N 21/86, G01N 21/01, G01N 21/78

(54) **Cylindrical reagent chip analyzer**

(71) Applicant: Kaiwood Technology Co. Ltd., Sinshih Township T'ai nan (TW)
(72) Inventor: Wu, Tzu-Chiang, Miaoli City Miaoli County 360 (TW); Lin, Mao-Ji, Sigang Township Tainan County (TW); Chuang, Chien-Ho, Kaohsiung (TW); Chuang, Tsung-Kai, Sinshih Township, Tainan City (TW); Wang, Jiann-Hua, Peitou Taipei (TW)
(74) Representative: Gee, Steven William

(57) **Abstract**

A cylindrical reagent chip analyzer comprises a rotating seat with a sample collection device mounted thereon, a motor, an image receiver connected to a computer. The motor drives the rotating seat to rotate. A lens of the image receiver is focused on reagent chips on the sample collection device. The image receiver then takes the images of the reagent chips and inputs the image data into the computer. The testing results are obtained after a color code comparison program analyzes the taken images.

## Description

### BACKGROUND OF THE INVENTION

### 1. Field of the Invention

The present invention relates to an analyzer that is capable of rapidly testing and analyzing reagent chips containing biological fluids samples, including urine, blood or sweat.

### 2. The Prior Arts

Due to the harm resulted from an improper use of drugs; some government agencies and private companies begin to drug test people before a new employee is hired. Sports organizations also drug test athletes during the sports events for a fair competition. Except tests for sophisticated projects that need to use special instruments and spend more time, tests for general projects usually only need to use the reagent, which can rapidly get testing results.

The present testing reagent in common use is a reagent strip having a reagent absorbed on the strip surface, or a reagent chip produced by biotechnology. After the reagent chip is exposed to biological fluid, the reagent develops a color or color intensity corresponding to the presence and/or concentration of the constituents present in the biological fluid being tested. For example, if the biological fluid contains a constituent of an illegal drug, the reagent chip will show the color darker or lighter than the standard color according to the designs of various companies. The color intensity is directly proportional to the concentration of the illegal drug.

In order to read the testing result, a color code corresponding to different concentration levels for the tested parameters is incorporated into the reagent chip. After the reagent chip is exposed to the biological fluid and changes its color, the color of the reagent chip is then read against the color code. It is hard to obtain the accurate testing value due to the visual errors of reading the color intensity. Thus, a Charge-Coupled Device (CCD) combined with computer software replaces the visual reading of the reagent chips. The testing method thereof uses the CCD camera to take the image of the reagent chip and input it into a computer having a color code comparison program. The color of the reagent chip is converted to a quantitative measurement of the parameter concentration, and compared with the color code. Then the testing result may be shown in numerical value, the specific and vivid color or expressed by any other proper ways.

For the convenience of testing, U.S. Patent Nos. 6,548,019 and 6,730,268 disclosed a device for collecting and assaying a sample of biological fluid in a single step. The feature of the device is that it provides a plurality of vertical peripheral channels arranged on the outside surface of a cylindrical container. Reagent strips exposed to the biological fluid are placed in the channels, and then a cover is placed at the top of the container to prevent the reagent strips thrown out of the channels. A user can visually examine the reagent strips from the outside surface of the container or manually takes the images of the reagent strips by the CCD camera, and then input the images into a computer.

### SUMMARY OF THE INVENTION

The present invention is designed to obviate the disadvantages of the previously described techniques that the testing cannot be analyzed and recorded simultaneously.

A primary feature of the present invention is to provide an analyzer that may more rapidly test the biochemical fluid sample. The analyzer puts a cylindrical sample collection device in rotation; then an image receiver fixed at the analyzer, such as a CCD or a CMOS, taking each image of rotating reagent chips. The images are inputted into a computer and a color code comparison program is used to compare the colors of the reagent chips with a color code. The results of comparison are shown on a computer monitor and saved in a file, thereby improving the testing efficient and lower the testing cost.

A technical feature of the present invention is the analyzer having a common base, on which a motor, a rotating seat and an image receiver are provided. The rotating seat, mounted on the drive axle of the motor and driven to rotate by the motor, provides a placing space for cylindrical sample collection device. The image receiver is connected to a computer having a color code comparison program. The lens of the image receiver is focused on a specific region above the placing space of the rotating seat, where the reagent chips will be. The images of the reagent chip on the sample collection device are taken by the image receiver, and then inputted into the computer. They are compared with the color code by the color code comparison program. Furthermore, the compared results are shown on a computer monitor.

Another technical feature of the present invention is that a light source is provided at a proper position of the common base. The light is directed to the reagent chips on the sample collection device, so that the image receiver can take the clear images of reagent chips.

The prior art is manually taking the images of the reagent strips by the CCD camera and saving the images into a computer. Therefore, it is unable to analyze the sample and record the results simultaneously. It is time consuming and expensive.

The present invention provides a design that after the biological fluid sample is placed in the analyzer, the sample can be automatically tested. Therefore, it reduces manual operations so as to improve the testing efficiency and reduce the testing cost.

### BRIEF DESCRIPTION OF THE DRAWINGS

The present invention will be apparent to those skilled in the art by reading the following detailed description of a preferred embodiment thereof, with reference to the attached drawings, in which:

Figure 1 is a perspective view showing a reagent chip analyzer in accordance with the present invention;

Figure 2 is a front view showing the analyzer in accordance with the present invention;

Figure 3 is a top view showing the analyzer in accordance with the present invention;

Figure 4 is a perspective view showing a conventional sample collection device of a biological fluid sample; and

Figure 5 is a cut away view showing the conventional sample collection device of the biological fluid sample.

### DETAILED DESCRIPTION OF THE PREFERRED EMBODIMENT

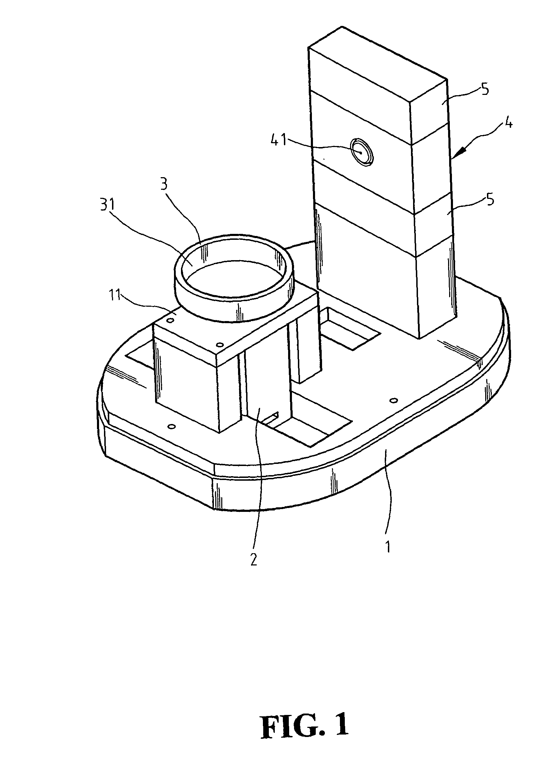

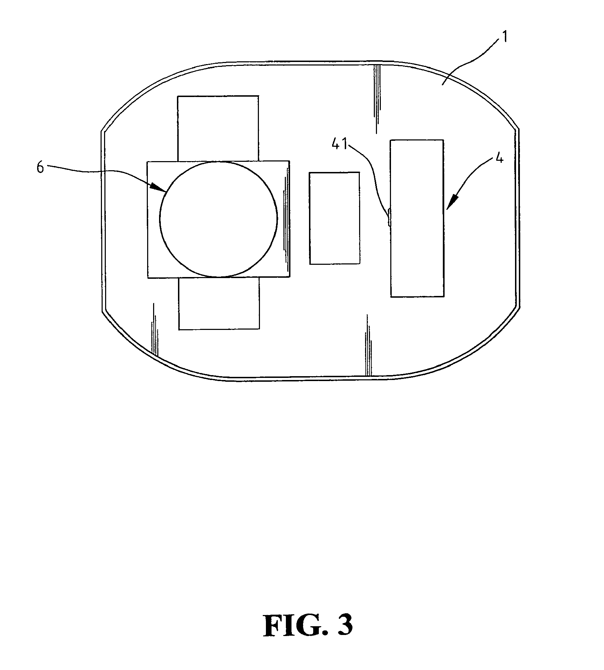

Figures 1-3 show a preferred embodiment of a reagent chip analyzer in accordance with the present invention. With reference to the drawings and in particular to Figures 1, the analyzer comprises a common base 1, a motor 2, a rotating seat 3, an image receiver 4, and a light source 5. The common base 1 can be steadily placed on the desktop or a work surface. The motor seat 11 is mounted on the common base 1. The motor 2, whose rotating direction can be changed, is installed under the motor seat 11 and can be connected to the general household power socket with a power cord (not shown). The drive axle 21 of the motor 2 vertically passes through the motor seat 11, and then the rotating seat 3 with a placing space 31 is horizontally mounted on the drive axle 21. Therefore the spacing space 31 is toward vertically upward and the motor 2 rotates the rotating seat 3 in a horizontal plane back and forth or continuously.

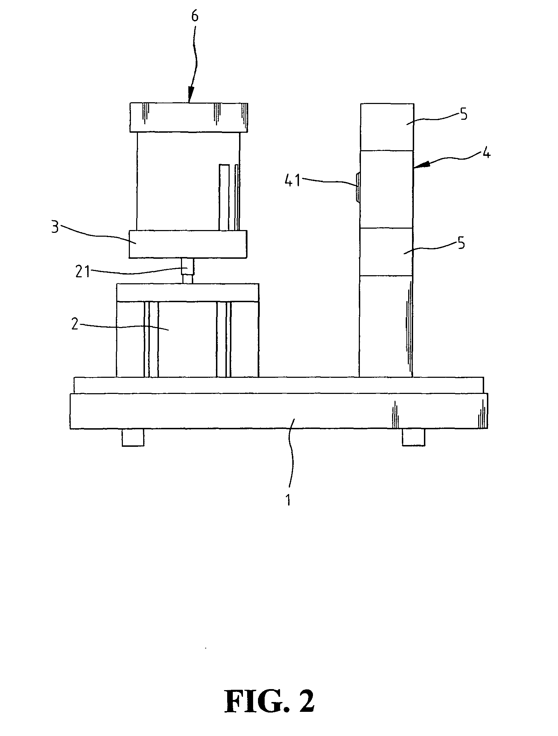

The image receiver with a lens 41 is installed at a frame of the common base 1, and the image receiver 4 may be a CCD (charged-coupled device) or a CMOS (complementary metal oxide semiconductor). The light source 5 is provided at a proper position adjacent to the image receiver 4, so that the light may be directed to the region above the rotating seat 3, where reagent chips 7 will be. The embodiment shown in the Figure 2 includes two sets of light sources 5 above and below the image receiver 4, and they illuminate the upper and lower parts of the region above the rotating seat 3. Therefore the region is uniformly illuminated. The number of light sources 5 can be chosen according to a practical requirement, because determining the accurate colors of the reagent chips needs to be done in an environment without the interference of color lighting. The image receiver 4 is connected to a computer having a color code comparison program. Because the operation theory and the technique of the computer equipment and the color code comparison program are not the point in the present invention, they will not be described in the description.

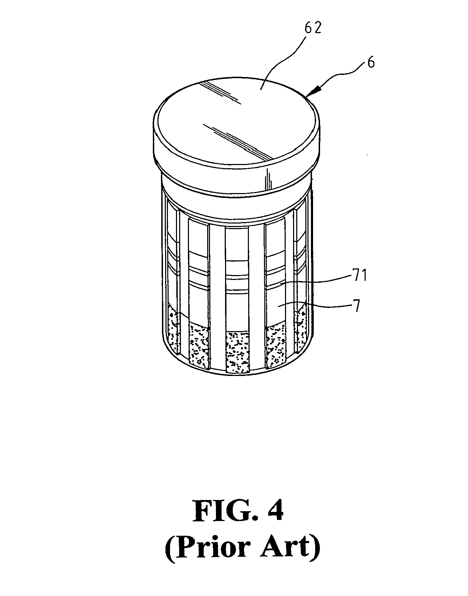

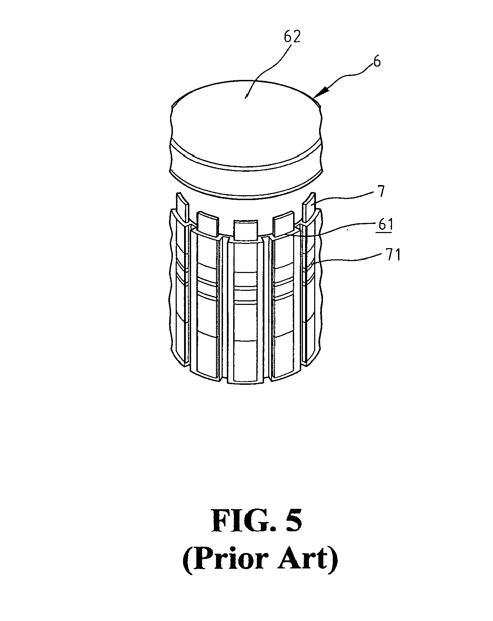

Figures 4 and 5 show the structure of a conventional sample collection device 6 of a biological fluid sample. It is a cylindrical container that can hold a plurality of reagent chips 7. A plurality of vertical peripheral channels 61 is provided on the outside surface of the cylindrical container. The reagent chips 7 are placed in the channels 61 of the cylindrical container, in which urine is placed. Color codes 71 are placed adjacent to the reagent chips or incorporated into the reagent chips for color comparison. A cover 62 is placed at the top of the container to prevent the reagent chips 7 and the color codes 71 thrown out of the channels 61. A user can get the testing results by visually examining the reagent chips 7 from the outside surface of the container.

Figure 2 shows the analyzer according to a preferred embodiment of the present invention. The sample collection device 6 of the biochemical fluid is directly mounted in the placing space 31 of the rotating seat 3. When the light source 5 is turned on, and the motor 2 is actuated to drive the rotating seat 3 to rotate, the image receiver 4 takes images of the reagent chips 7 and the color codes 71 by a lens 41. The image receiver 4 also assigns an ID number to each image for color comparison later. The taken image data is then transferred to a computer, and the color of the reagent chip 7 is compared to the color code 71 by a color code comparison program. The testing result is shown in colors or a numerical value on a computer monitor. The presentation of the testing results is not the scope of the present invention, so it will not be described in the description.

Although the present invention has been described with reference to the preferred embodiment thereof, it is apparent to those skilled in the art that a variety of modifications and changes may be made without departing from the scope of the present invention which is intended to be defined by the appended claims.

## Claims

1. A cylindrical reagent chip analyzer, comprising:
a common base;
a motor having a drive axle, arranged on said common base;
a rotating seat having a placing space, mounted on said drive axle of said motor;
an image receiver having a lens, arranged on said common base and connected to a computer with a color code comparison program, wherein said lens is focused on the region above said placing space of said rotating seat; and
at least one light source, which illuminates the region above said placing space of said rotating seat.

2. The cylindrical reagent chip analyzer as claimed in Claim 1, wherein said motor drives said rotating seat to rotate back and forth in an angular range.

3. The cylindrical reagent chip analyzer as claimed in Claim 1, wherein said motor drives said rotating seat to rotate continuously.

4. The cylindrical reagent chip analyzer as claimed in Claim 1, wherein said light source, which is adjacent to said image receiver, illuminates the region above said rotating seat.

5. The cylindrical reagent chip analyzer as claimed in Claim 1, wherein said image receiver is a charge-coupled device.

6. The cylindrical reagent chip analyzer as claimed in Claim 1, wherein said image receiver is a complementary metal oxide semiconductor.

7. The cylindrical reagent chip analyzer as claimed in Claim 1, wherein said drive axle points vertical upward; said rotating seat is horizontally mounted on said drive axle; said placing space is toward vertically upward; and an axis of said lens is perpendicular to a rotating axis of said rotating seat.
